# EUROPÄISCHE PATENTSCHRIFT

(11) **EP 0 532 910 B1**
(45) Veröffentlichungstag und Bekanntmachung des Hinweises auf die Patenterteilung: **02.05.1997**
(21) Anmeldenummer: 92113796.4
(22) Anmeldetag: 13.08.1992
(51) Int. Cl.: F24D 17/00

(54) **Einrichtung zur Wärmerückgewinnung aus erwärmtem Haushalts-Trinkwasser**
Installation for heat recovery from domestic hot water
Installation pour la récupération de chaleur des eaux chaudes domestiques

(30) Priorität: 14.08.1991 DE 4126791
(43) Veröffentlichungstag der Anmeldung: 24.03.1993
(73) Patentinhaber: Seib, Klaus, D-55283 Nierstein (DE); Thomas, Hans-Werner, D-55276 Oppenheim (DE)
(72) Erfinder: Seib, Klaus, D-55283 Nierstein (DE); Thomas, Hans-Werner, D-55276 Oppenheim (DE)
(74) Vertreter: Kodron, Rudolf S., Dipl.-Ing.

(56) Entgegenhaltungen:
- DE-A- 2 415 877
- DE-A- 2 538 168
- DE-A- 2 908 679
- DE-A- 3 113 784
- FR-A- 2 490 329

## Beschreibung

Die Erfindung betrifft eine Einrichtung zur Wärmerückgewinnung aus warmem Haushaltsabwasser mit einem ersten Rohrleitungssystem zum Sammeln des warmen Abwassers aus den Verbrauchsstellen des Haushalts und Zuführen desselben in einen Tank, der einen ersten Ausgang aufweist, der in den Abwasserkanal führt.

DE-A-3 113 784, DE-A-2 908 679 und FR-A-2 490 329 beschreiben Anlage zur Wärmerückgewinnung aus häuslichem Abwasser.

Im Haushalt fallen an verschiedenen Trinkwasserverbrauchsstellen Wärmemengen an, die nach erfolgtem Wasserverbrauch ungenutzt mit dem abfließenden erwärmten Abwasser verloren gehen.

Die bisher bekanntgewordenen Bemühungen zur Abwasserwärmerückgewinnung erstrecken sich zumeist auf einzelne Wasserentnahmestellen und ergeben daher nur eine geringfügige Ernergieeinsparung.

Eine beispielsweise durch die EP 0 088 055 A1 bekanntgewordene Einrichtung sammelt lediglich das warme Abwasser der Küchenspüle und eines Geschirrspülers oder einer Waschmaschine und führt diese beiden Abwassermengen dem Sammeltank einer elektrischen Wärmepumpe zu, aus welchem eine Pumpe das aufgenommene Abwasser in den Abwasserkanal abpumpt, nachdem ihm so lange Wärme entzogen wurde, bis die Temperatur auf 4-6°C abgesenkt ist.

Diese Einrichtung erfaßt nicht die Gesamtheit des im Haushalts anfallenden warmen Abwassers und bedarf einer teuren, komplizierten und energieverbrauchenden elektrischen Wärmepumpe, die durch schmutzhaltige Abwässer rasch verstopft wird.

Der Erfindung liegt die Aufgabe zugrunde, ohne Einsatz einer Wärmepumpe eine einfach, wartumgsarm und energielos arbeitende Wärmerückgewinnung von möglichst allen im Haushalt anfallenden warmen Abwässern zu erzielen, nachdem diese von den kalten Abwässern abgetrennt worden sind, wobei auch noch die Möglichkeit bestehen soll, das der Wärmerückgewinnung unterworfene Abwasser als Toiletten-Spülwasser zu verwenden.

Gelöst wird diese Aufgabe nach der Erfindung dadurch, daß der Tank als Verteilertank ausgebildet und mit einem Innenwandfilter ausgestattet ist und daß der in den Abwasserkanal führende Ausgang mittels eines Absperrorgans über ein Magnetventil und einen die Wassertemperatur im Verteilertank messenden Temperaturfühler absperrbar ist und daß der Verteilertank einen zweiten Ausgang aufweist,über den oberhalb einer bestimmten einstellbaren Temperatur das durch den Innenwandfilter gereinigte Abwasser in eine zweite Rohrleitung in einen Wärmetauschertank ableitbar ist und daß der Wärmetauschertank über ein überlaufrohr mit dem Abwasserkanal verbunden ist und eine Wärmetauscher-Rohrschlange aufweist, durch die kaltes Trinkwasser hindurchgeleitet wird, das über ein drittes Rohrleitungssystem den Verbrauchsstellen des Haushalts einerseits und über eine vierte Rohrleitung einem Boiler andererseits zuführbar ist, wobei der Boiler über ein fünftes Rohrleitungssystem mit den einzelnen Verbrauchsstellen des Haushalts in Verbindung steht.

Bei einer abgewandelten Ausführungsform einer Einrichtung der genannten Art ist an dem überlaufrohr des Wärmetauschertanks ein Abwasserauffangtank angeschlossen, der mittels einer sechsten Rohrleitung mit dem Toiletten-Spülkasten verbunden ist, so daß hierdurch auch noch der Trinkwasserverbrauch im Haushalt dadurch verringert wird, daß für den Toiletten-Spülkasten kein frisches Trinkwasser verwendet wird. Dies ergibt eine Verminderung des Trinkwasserverbrauchs im Haushalts um 33%.

Nachfolgend wird anhand einer Schemazeichnung die zweitgenannte Ausführungsform der Erfindung näher erläutert und beschrieben.

Die einzelnen Wasserverbrauchsstellen im Haushalt, nämlich die Dusche 1, die Badewanne 2, das Handwaschbecken 3, die Küchenspüle 4, die Geschirrspülmaschine 5 und die Waschmaschine 6, geben ihr erwärmtes Abwasser über das Rohrleitungssystem I an einen Verteilertank 9 ab, der mit einem doppelwandigen Innenwandfilter 7,8 ausgestattet ist, wobei die innere Filterwand 7 ein Grobfilter und die äußere Filterwand 8 ein Feinfilter ist.

Der Verteilertank 9 besitzt die beiden Ausgänge 10 und 11.

Der Ausgang 10 ist mittels eines Absperrorgans 12 abschließbar, das über ein angeschlossenes Magnetventil 13 und einen die Wassertemperatur im Verteilertank 9 messenden Temperaturfühler 14 gesteuert wird. Wenn der Temperaturfühler 14 eine Abwassertemperatur im Verteilertank 9 mißt, welche unterhalb einer eingestellten Temperaturstufe von beispielsweise 35°C liegt, dann öffnet das Absperrorgang 12 und gibt das Abwasser des Verteilertanks 9 an den Abwasserkanal VII ab.

Wenn dagegen erwärmtes Abwasser von mehr als der eingestellten Temperaturstufe in den Verteilertank 9 fließt, dann schließt sich das Absperrorgan 12 und das warme Abwasser fließt über den zweiten Ausgang 11 durch die Rohrleitung II in einen Wärmetauschertank 15. Dieser ist mit einer Entlüftungsöffnung 19 und einem Manometer 20 sowie einer Trinkwasserzufuhröffnung 21 versehen, durch welche frisches Trinkwasser von beispielsweise 10°C in eine im Wärmetauschertank 15 angeordnete Rohrschlange 16 fließt.

Nachdem das im Wärmetauschertank 15 aufgefangene warme Abwasser seine Wärme an das in der Rohrschlange 16 befindliche Trinkwasser abgegeben hat, verläßt es in abgekühltem Zustand die Austrittsöffnung 22 des Wärmetauschertanks und wird über das Abwasserabflußrohr VI dem Abwasserkanal VII zugeführt.

Trinkwasser wird über die Rohrleitung III als zuzumischendes vorgewärmtes Kaltwasser verwendet und beispielsweise der Dusche 1 und der Waschmaschine 6 zugeführt, wogegen das restliche erwärmte Trinkwasser über die abgezweigte Rohrleitung IV einem Boiler 17 zugeleitet wird, der das vorgewärmte Frischwasser auf etwa 60°C erhitzt.

Über das Rohrleitungssystem V gelangt dieses erhitzte Frischwasser dann zu den einzelnen Wasserverbrauchsstellen 1 bis 6 im Haushalt und steht dort für den Verbrauch zur Verfügung.

Bei der beschriebenen Einrichtung zur Wärmerückgewinnung aus verschmutztem Abwasser wird eine Selbstreinigung im schmutzgefährdeten Verteilertank 9 dadurch erzielt, daß sehr häufig bei geöffnetem Absperrorgan 12 kühles Abwasser mit hoher Geschwindigkeit durch den Verteilertank 9 in den Abwasserkanal VII strömt und an der Innenseite des Grobfilters 7 angelagerte Schmutzpartikel mitreißt und auf diese Weise den Grobfilter 7 reinigt.

Die gesamte Einrichtung zur Wärmerückgewinnung erfaßt somit in optimaler Weise sämtliche an den verschiedenen Wasserverbrauchsstellen im Haushalt anfallenden erwärmten Abwassermengen und führt diese einer zentralen Wärmerückgewinnung zu und überwindet das mögliche Verschmutzungsproblem durch eine eingebaute Selbstreinigung.

An dem Abwasserabflußrohr VI kann ein Abwasserauffangtank 18 angeschlossen sein, der mittels einer Rohrleitung VIII mit dem im Schemabild nicht dargestellten Toiletten-Spülkasten verbunden ist , so daß der Toiletten-Spülkasten nicht durch sauberes Trinkwasser, sondern durch Haushalts-Abwasser beschickt wird, wodurch eine Senkung des Trinkwasserverbrauchs im Haushalt um etwa ein Drittel eintreten kann.

Das im Wärmetauschertank 15 in der Rohrschlange 16 erwärmte Trinkwasser wird über die Rohrleitung III als zuzumischendes Kühlwasser der Dusche 1 und der Waschmaschine 6 zugeführt, wogegen das restliche erwärmte Trinkwasser über die abgezweigte Rohrleitung IV einem Boiler 17 zugeleitet wird, der das Frischwasser auf etwa 60° C erhitzt.

Über das Rohrleitungssystem V gelangt dieses erhitzte Frischwasser dann zu den einzelnen Wasserverbrauchsstellen 1 bis 6 im Haushalt und steht dort für den Verbrauch zur Verfügung.

Bei der beschriebenen Einrichtung zur Wärmerückgewinnung aus verschmutztem Abwasser wird eine Selbstreinigung im schmutzgefährdeten Verteilertank 9 dadurch erzielt, daß sehr häufig bei geöffnetem Absperrorgan 12 kühles Abwasser mit hoher Geschwindigkeit durch den Verteilertank 9 in den Abwasserkanal VII strömt und an der Innenseite des Grobfilters 7 angelagerte Schmutzpartikel mitreißt und auf diese Weise den Grobfilter 7 reinigt.

Die gesamte Einrichtung zur Wärmerückgewinnung erfaßt somit in optimaler Weise sämtliche an den verschiedenen Wasserverbrauchsstellen im Haushalt anfallenden erwärmten Abwassermengen und führt diese einer zentralen Wärmerückgewinnung zu und überwindet das mögliche Verschmutzungsproblem durch eine eingebaute Selbstreinigung.

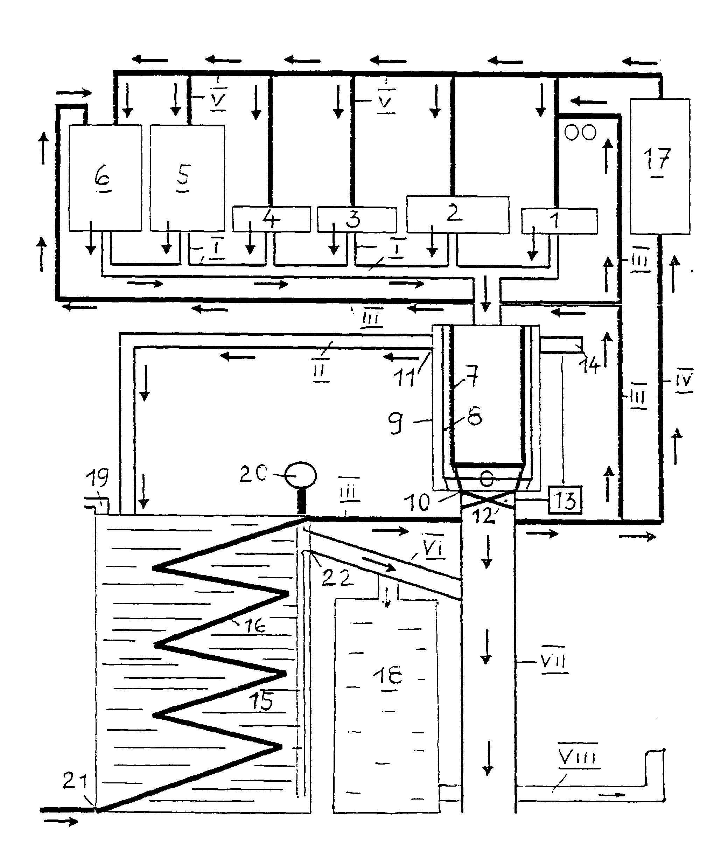

## Patentansprüche

1. Einrichtung zur Wärmerückgewinnung aus warmem Haushalts-abwasser mit einem ersten Rohrleitungssystem (I) zum Sammeln des warmen Abwassers aus den Verbrauchsstellen des Haushalts und Zuführen desselben in einen Tank, der einen ersten Ausgang (10) aufweist, der in den Abwasserkanal (VII) führt,
dadurch gekennzeichnet, daß
- der Tank als Verteilertank (9) ausgebildet und mit einem Innenwandfilter (7,8) ausgestattet ist
und daß
- der in den Abwasserkanal (VII) führende Ausgang (10) mittels eines Absperrorgans (12) über ein Magnetventil (13) und einen die Wassertemperatur im Verteilertank (9) messenden Temperaturfühler (14) absperrbar ist.
und daß
- der Verteilertank (9) einen zweiten Ausgang (11) aufweist,
- über den oberhalb einer bestimmten einstellbaren Temperatur das durch den Innenwandfilter (7,8) gereinigte Abwasser in eine zweite Rohrleitung (II) in einen Wärmetauschertank (15) ableitbar ist
und daß
- der Wärmetauschertank (15) über ein überlaufrohr (VI) mit dem Abwasserkanal (VII) verbunden ist
und
- eine Wärmetauscher-Rohrschlange (16) aufweist, durch die kaltes Trinkwasser hindurchgeleitet wird,
- das über ein drittes Rohrleitungssystem (III) den Verbrauchsstellen des Haushalts einerseits und über eine vierte Rohrleitung (IV) einem Boiler (17) andererseits zuführbar ist,
- wobei der Boiler (17) über ein fünftes Rohrleitungssystem (V) mit den einzelnen Verbrauchsstellen (1-6) des Haushalts in Verbindung steht.

2. Einrichtung nach Anspruch 1,
dadurch gekennzeichnet, daß
- an dem überlaufrohr (VI) des Wärmetauschertanks (15) ein Abwasserauffangtank (18) angeschlossen ist, der mittels einer sechsten Rohrleitung (VIII) mit dem Toiletten-Spülkasten verbunden ist.

## Claims

1. Installation for heat recovery from warm house hold drain water produced at household water consumption points, comprising
a distributor tank,
a first pipeline system (A) which collects warm household drain water from said consumption points and delivers it to said distributor tank,
said distributor tank having a first outlet leading into a drain water channel (V), a temperature sensor which senses the temperature of the drain water in the distributor tank, and a shut-off device with a solenoid valve located at said first outlet which opens the first outlet leading into the drain water channel (G) when the temperature of the drain water in the distributor tank is below a predetermined temperature,
said distributor tank having a second outlet leading into a second pipeline system (B) when the drain water in the distributor tank is above said predetermined temperature,
a heat exchange tank supplied by the drain water in the second pipeline system (B).
an overflow pipe (F) connecting the drain water in said heat exchange tank to said drain water channel (G),
a heat exchange coil through which cold drinking water is conveyed disposed within said heat exchange tank and in thermal communication with said drain water in said heat exchange tank,
a third pipeline system (C) connected to said heat exchange coil and conveying said drinking water away from said heat exchange tank and some of said drinking water to said household consumption points,
a fourth pipeline system (D) connected to said third pipeline system (C) and conveying the remainder of said drinking water in said third pipeline system (C) to a boiler, and
a fifth pipeline system (E) conveying the water in said boiler to said household consumption points.

2. The installation of claim 1 wherein the household drain water coming from the heat exchange tank is conveyed either by a sixth pipeline (F) to the drain water channel (G) or to a drain water collecting tank 18 and from there by a pipeline (H) to the toilet flushing water tank.

## Revendications

1. Installation pour récupération des calories contenues dans les eaux domestiques usées comprenant un premier système de drainage de tuyauterie menant les eaux usées chaudes des points divers de consommation domestique à un réservoir ayant une sortie vers le canal des eaux d'égouts,
caractérisée par le fait
- que le réservoir (9) est équipé d'un filtre épurateur intérieur (7,8) et peut bifurquer l'eau usée
- par une sortie (10) vers le canal des eaux d'égouts (VII) qui peut être fermée par l'action combinée d'une électro-vanne (13) et d'une sonde de température (14), qui mésure la température de l'eau usée entrant dans le réservoir (9)
ou
- par une autre sortie (11) - au-dessus d'une température de valeur de référence - dans un deuxième tuyau (II) vers une cuve d'échange de chaleur (15) équipée d'un échangeur à serpentin (16) rempli d'eau fraîche froide et d'un trop-plein (VI) relié avec le canal des eaux d'égouts (VII),
- que l'eau fraîche est aussi menée par un quatrième tuyautage (IV) à un chauffe-eau (17)
et
- que le chauffe-eau (17) est relié par un cinquième tuyautage (V) avec les points divers de consommation (1-6).

2. Installation selon la revendication 1,
caractérisée en ce que le trop-plein (VI) relié avec le canal des eaux d'égouts (VII) a une sortie vers un ballon récepteur (18) qui est relié par un seizième tuyautage (VIII) avec le water-closet.
